# EUROPEAN PATENT APPLICATION

(11) **EP 4 841 814 A1**
(43) Date of publication of application: **18.11.2026**
(21) Application number: 26165654.0
(22) Date of filing: 18.03.2026
(51) Int. Cl.: H01M 50/583, H01M 50/209, H01M 50/507, H01M 50/342, A62C 3/16

(54) **BATTERY MODULE AND ENERGY STORAGE SYSTEM INCLUDING THE SAME**

(30) Priority: 12.05.2025 KR 20250061319
(71) Applicant: SAMSUNG SDI CO., LTD., Yongin-si, Gyeonggi-do 17084 (KR)
(72) Inventor: Jung, Jaehyung, 17084 Yongin-si, Gyeonggi-do (KR); Seo, Jeawon, 17084 Yongin-si, Gyeonggi-do (KR); Hong, Sangjin, 17084 Yongin-si, Gyeonggi-do (KR); Eom, Jaepil, 17084 Yongin-si, Gyeonggi-do (KR); Yoon, Seunghan, 17084 Yongin-si, Gyeonggi-do (KR); Gong, Hyojeong, 17084 Yongin-si, Gyeonggi-do (KR)
(74) Representative: Meissner Bolte Partnerschaft mbB

(57) **Abstract**

A battery module (100, 200, 300, 1000) includes a plurality of battery cells (10, 20, 30, 1100) arranged in multiple rows substantially parallel to one another, a housing accommodating the plurality of battery cells (10, 20, 30, 1100) , and a cover covering a side of the housing, wherein a fuse (F, 1110) is arranged in a region of each of the plurality of battery cells (10, 20, 30, 1100).

## Description

### FIELD

The invention relates to a battery module and an energy storage system including the same.

### BACKGROUND

A secondary battery is a type of battery that can be charged and discharged, unlike a primary battery that cannot be charged. A low-capacity secondary battery is used in small portable electronic devices such as a smartphone, a feature phone, a laptop computer, a digital camera, and a camcorder, and a large-capacity secondary battery is widely used as a power source for driving motors of a hybrid vehicle, an electric vehicle, etc. and as a battery for storing electrical power, etc. The secondary battery comprises an electrode assembly including a positive electrode and a negative electrode, a case for accommodating the electrode assembly, and an electrode terminal connected to the electrode assembly.

The information disclosed in the Description of the Related Art is only for enhancement of understanding of the background of the invention and therefore may contain information that does not constitute related (or prior) art.

### SUMMARY

The invention provides a battery module with improved stability and an energy storage system including the same.

However, aspects and features of the invention are not limited to those described herein, and other aspects and advantages that are not mentioned herein may be clearly understood from the following description of the invention by those skilled in the art.

The invention provides a battery module including a plurality of battery cells arranged in multiple rows substantially parallel to one another, a housing accommodating the plurality of battery cells, and a cover covering a side of the housing, wherein a fuse is arranged in a region of each of the plurality of battery cells.

In embodiments, the battery cell may further include a vent hole arranged on a surface of the battery cell, wherein the fuse is arranged to correspond to the vent hole.

In embodiments, the fuse may include a thermal fuse.

In embodiments, the thermal fuse may include an insulating case and a fusible body enclosed by resin.

In embodiments, the fusible body may be configured to blow at a temperature of about 85°C to about 150°C.

A battery module includes a plurality of battery cells arranged in multiple rows substantially parallel to one another, a plurality of bus bars electrically connecting one battery cell to a battery cell that is adjacent to the one battery cell among the plurality of battery cells, a housing accommodating the plurality of battery cells, and a cover covering one side of the housing, wherein a fuse is arranged in one region of each of the plurality of bus bars.

In embodiments, the fuse may include a thermal fuse.

In embodiments, the thermal fuse may include an insulating case and a fusible body enclosed by resin.

In embodiments, the fusible body may be configured to blow at a temperature of about 85°C to about 150°C.

An energy storage system includes a plurality of battery modules and a fire extinguishing device, wherein a plurality of battery cells are accommodated in the battery module, and a fuse is arranged in one region of each of the battery cells.

In embodiments, the battery cell may include a vent hole arranged on a surface thereof, and the fuse may be arranged to correspond to the vent hole.

In embodiments, the battery module may include a plurality of bus bars electrically connecting one battery cell to a battery cell that is adjacent to the one battery cell among the plurality of battery cells, and the fuse may be arranged in one region of each of the plurality of bus bars.

In embodiments, the fuse may include a thermal fuse.

In embodiments, the thermal fuse may include an insulating case and a fusible body enclosed by resin.

In embodiments, the fusible body may be configured to blow at a temperature of about 85°C to about 150°C.

In embodiments, the fuse may be electrically connected to a fire extinguishing device.

In embodiments, the fire extinguishing device may include a relay, a fire alarm control panel (FACP), and a fire extinguisher.

In embodiments, the relay may include a first contact and a second contact, and the relay, which corresponds to a state that the first contact is closed, may be operated to a state that the second contact is closed when the fuse blows.

In embodiments, a valve may be arranged in one region of the fire extinguisher, and the valve may be configured to operate when the relay corresponds to a state that the second contact is closed.

In embodiments, the valve may include a solenoid valve.

### BRIEF DESCRIPTION OF THE DRAWINGS

The following drawings attached to the present specification illustrate preferred embodiments of the invention and serve to further understand the technical idea of the invention together with the detailed description of the invention described herein, and therefore the invention should not be interpreted as being limited to matters described in such drawings:
FIG. 1 is a perspective view schematically illustrating an example of a battery module according to embodiments of the invention;
FIG. 2 is a perspective view schematically illustrating an example of a battery cell of the battery module in FIG. 1;
FIG. 3 is a cross-sectional view schematically illustrating an example of cross-section taken along line I-I' in FIG. 2;
FIG. 4 is a perspective view schematically illustrating an example of a battery module according to embodiments of the invention;
FIG. 5 is a perspective view schematically illustrating an example of a battery module according to embodiments of the present invention; and
FIG. 6 is a schematic diagram schematically illustrating an example of a fire extinguishing device according to embodiments of the invention.

### DETAILED DESCRIPTION

Hereinafter, preferred embodiments of the invention will now be described in detail with reference to the accompanying drawings. Prior to this, terms or words used in the present specification and claims should not be interpreted as limited to the usual or dictionary meanings, and should be interpreted as meanings and concepts that conform to the technical idea of the present invention based on the principle that the inventor may appropriately define the concept of the term in order to describe his or her own invention in the best way. Therefore, the embodiments described in the specification and the configurations illustrated in the drawings are only some of the most preferred embodiments of the present invention and do not represent all of the technical ideas of the present invention, and it should be understood that there may be various equivalents and modified examples that may replace them at the time of filing the present application. In addition, as used herein, "comprise, include" and/or "comprising, including" specifies the existence of the aforementioned shapes, numbers, steps, actions, members, elements, and/or groups, and does not exclude the existence or addition of one or more other shapes, numbers, actions, members, elements, and/or groups.

In addition, to help understanding of the invention, the accompanying drawings are not illustrated to the actual scale, and the dimensions of some components may be exaggerated. In addition, the same reference numbers may be designated as the same components in different embodiments.

Although the terms the first, the second, etc. are used to describe various components, those components are not limited by those terms. Those terms are only used for distinguishing one component from another component, and it goes without saying that the first component may be the second component unless otherwise described to the contrary.

Throughout the specification, unless otherwise described to the contrary, each component may be singular or plural.

Any configuration being placed "on an upper portion of (or a lower portion of)" a component or "on (or below)" a component may mean not only that any configuration is placed in contact with the upper surface (or lower surface) of said component, but also that other configurations may be interposed between said component and any configuration placed on (or below) said component.

In addition, when it is described that a component is "connected," "coupled," or "linked" to another component, it should be understood that the components may be directly connected or connected to one another, but that other components may also be "interposed" between the components, or that each component may be "connected," "coupled," or "linked" through other components. Also, when we say that a part is electrically coupled to another part, this includes not only cases where they are directly connected, but also cases where they are connected with another element in between.

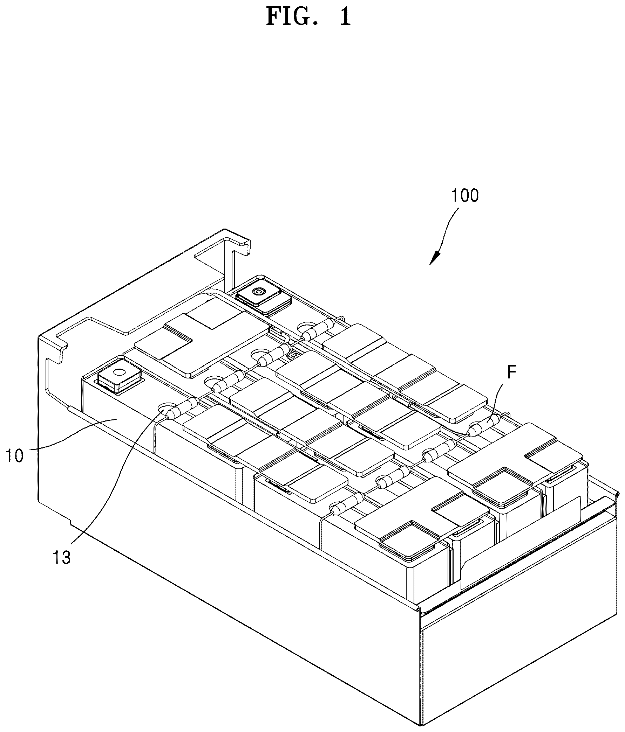

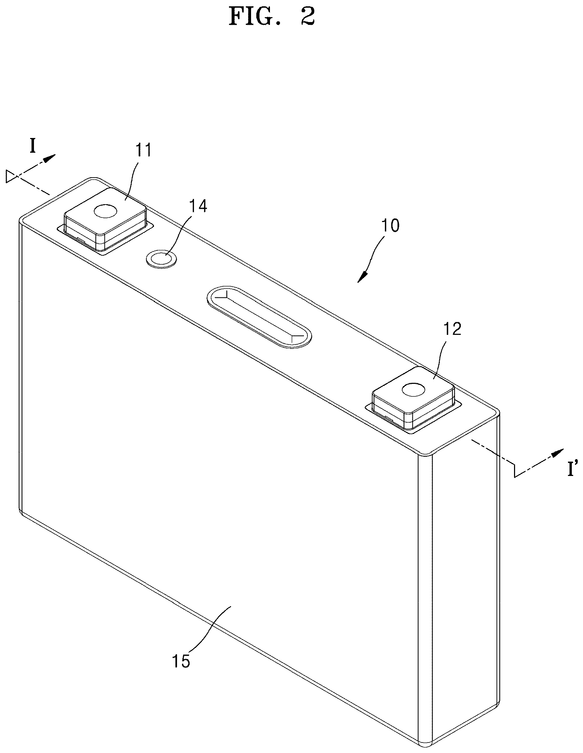

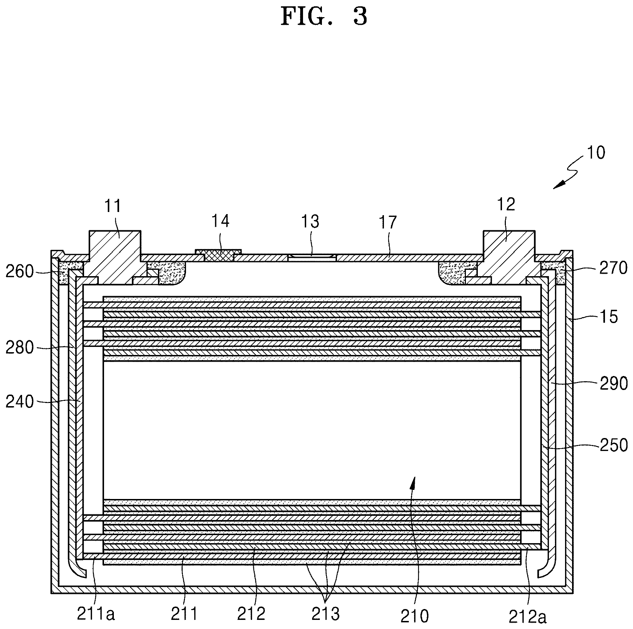

FIG. 1 is a perspective view schematically illustrating an example of a battery module according to embodiments of the present invention, FIG. 2 is a perspective view schematically illustrating an example of a battery cell of the battery module in FIG. 1, and FIG. 3 is a cross-sectional view schematically illustrating an example of a cross-section taken along line I-I' in FIG. 2.

Referring to FIGS. 1 to 3, a battery module 100 according to embodiments of the invention may include a plurality of battery cells 10 arranged to form multiple rows substantially parallel to one another and a fuse F arranged to correspond to a vent hole 13 of each of the plurality of battery cells 10.

The battery module 100 may include a housing, and the plurality of battery cells 10 arranged to form multiple rows parallel to one another may be accommodated in the housing.

In a selective embodiment, the battery module 100 may include a cover covering one side of the housing.

The battery cell 10 may include at least one electrode assembly 210 that is a wound structure having a positive electrode 211, a negative electrode 212, and a separator which is an insulator interposed therebetween and a case 15 in which the electrode assembly 210 is housed.

The battery cell 10 according to the present embodiment is described, by way of example, as a prismatic battery cell. However, the invention is not limited thereto, and may be applied to various types of battery cells, such as a pouch-type battery cell and a cylindrical battery cell.

The positive electrode 211 and the negative electrode 212 may include a coated portion, which is an area where an active material is coated on a current collector that is a metal foil in the shape of a thin plate, and an uncoated portion 211a, 212a, which is an area where the active material is not coated.

The positive electrode 211 and the negative electrode 212 are wound with a separator 213, which is an insulator, interposed therebetween. However, the invention is not limited thereto, and the electrode assembly 210 described herein may be configured to a stacked structure in which a plurality of positive electrode sheets and a plurality of negative electrode sheets are alternately stacked with the separators interposed therebetween.

The case 15 may define the overall appearance of the battery cell 10 and may include a conductive metal such as aluminum, aluminum alloy, and nickel-plated steel. In addition, the case 15 may provide a space in which the electrode assembly 210 is accommodated. The battery cell 10 may include a cap plate 17 covering an opening of the case 15, and the case 15 and the cap plate 17 may include a conductive material. In embodiments, a first terminal 11 and a second terminal 12, which are electrically connected to the positive electrode 211 or the negative electrode 212, may be installed to protrude outward through the cap plate 17.

In addition, the outer circumferential surfaces of the upper pillars of the first terminal 11 and the second terminal 12, which protrude outward from the cap plate 17, may be threaded and fixed to the cap plate 17 with nuts.

However, the invention is not limited thereto, and the first terminal 11 and the second terminal 12 may be configured in a rivet structure and be coupled by riveting, or may be coupled to the cap plate 17 by welding.

In addition, the cap plate 17 may be provided as a thin plate and coupled to the opening of the case 15, and the cap plate 17 may include an electrolyte injection hole 14 in which a sealing plug is configured to be installed and a vent hole 13 in which a notch is arranged. The first terminal 11 and the second terminal 12 may be electrically connected to current collectors including first and second current collectors 240 and 250 (hereinafter referred to as positive and negative current collectors) that are welded to a positive uncoated portion 211a or a negative uncoated portion 212a.

For example, the first terminal 11 and the second terminal 12 may be coupled to the positive and negative current collectors 240 and 250, respectively, by welding. However, the invention is not limited thereto, and the first terminal 11 and the second terminal 12 may be integrally coupled with the positive and negative current collectors 240 and 250. In addition, insulating members 260 and 270 may be installed between the electrode assembly 210 and the cap plate 17. In embodiments, it is possible for the insulating members 260 and 270 to be installed between the electrode assembly 210 and the cap plate 17.

In addition, according to the present embodiment, one end of a separating member may be installed between the insulating members 260 and 270 and the first terminal 11 and the second terminal 12, to face one side of the electrode assembly 210.

In embodiments, the separating members may include first and second separating members 280 and 290.

Accordingly, ends of the first and second separating members 280 and 290 may be installed between the insulating members 260 and 270 and the first terminal 11 and the second terminal 12, to face corresponding side of the electrode assembly 210.

Thus, the first terminal 11 and the second terminal 12, which are welded to the positive and negative current collectors 240 and 250, may be coupled to the ends of the insulating member 260 and 270 and the first and second separating members 280 and 290.

The fuse F may be arranged in a region of the battery cell 10 and blow at various temperatures, and, in embodiments, the fuse F may be a temperature sensing circuit breaker and may serve to break the circuit by detecting overheating caused by fire, short circuit, or abnormal operation.

The fuse F may form an electronic circuit that transmits an electrical signal to the fire alarm control panel (FACP), and at a low temperature, the fuse F may be short-circuited, allowing the signal transmission through the electronic circuit, but when a high temperature is applied, the fuse F may blow, which changes the circuit to an open mode. When the circuit changes to the open mode due to the fuse F blowing, the operation of the circuit may switch to a passive operation that does not require power, allowing the fire to be recognized by the fire alarm control panel (FACP) through a hardwired signal transmission method embedded in the hardware.

In a selective embodiment, the fuse F may be arranged to correspond to the vent hole 13 of the battery cell 10, and when an event occurs in the battery cell 10 and high-temperature gas or flame generated inside the battery cell 10 is discharged to the outside through the vent hole 13, the fuse F may blow by the temperature of the high-temperature gas or flame, ruptured by the pressure of the high-temperature gas, or broken by a cover portion of the vent hole 13 that is broken when the vent hole 13 is ruptured.

In a specific embodiment, the fuse F arranged to correspond to the vent hole 13 of the battery cell 10 may be short-circuited at a low temperature to allow the signal transmission through the electronic circuit, but may blow due to the high-temperature gas or flame generated inside the battery cell 10 when the event occurs in the battery cell 10, to change the circuit to the open mode. When the fuse F opens in this manner, the normally close

(NC) contact of the relay closes, allowing the fire alarm control panel (FACP) to immediately detect the fire. In addition, when receiving the electrical signal, the fire alarm control panel (FACP) may transmit an electrical signal to a fire extinguishing device and the fire extinguishing agent may be sprayed to the battery module 100.

In embodiments, the fuse F may include a thermal fuse. In embodiments, the thermal fuse may include an insulating case, a fusible body enclosed by an encapsulating resin in the insulating case, and lead wires configured to be electrically connected to the outside at opposite ends of the fusible body. Thus, when heat exceeding a certain temperature is applied to the fusible body, the fusible body may be melted, and the electrical connection may be broken. In this case, as the thermal fuse has very low internal resistance, there is almost no self-heating due to current flow when it is applied to a circuit, and the fusible body may blow by the influence due to a rise in ambient temperature, thereby opening the circuit.

In embodiments, the fuse F may blow at various temperatures, and the blowing temperature may be selected according to the specifications and purpose of the battery cell 10 or the battery module 100. Specifically, the fuse F, which is arranged to correspond to the vent hole 13, may blow at a temperature of about 85°C to about 150°C, and when the fuse F blows at a temperature less than about 85°C, there may be a problem in that the fire extinguishing device is operated even when there is no actual event in the battery cell 10, and when the fuse F blows at a temperature more than about 150°C, it may be difficult to detect the occurrence of the event in the battery cell 10 at an early stage.

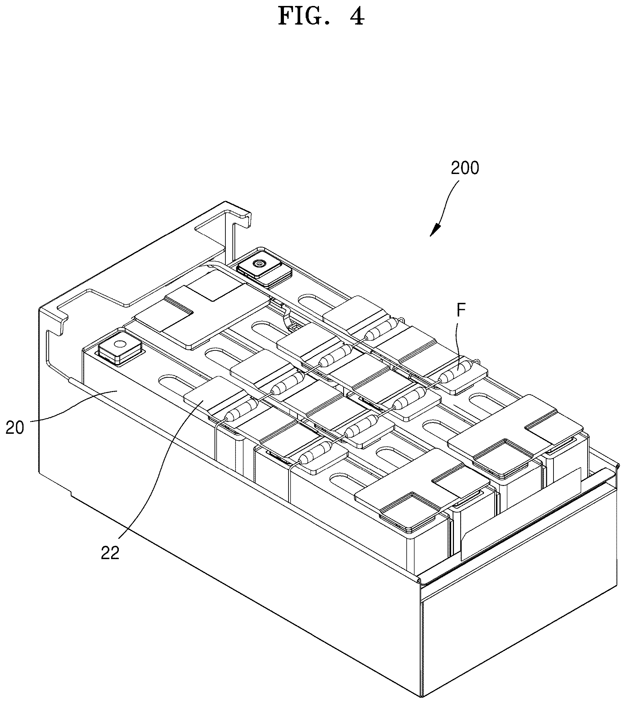

FIG. 4 is a perspective view schematically illustrating an example of a battery module according to embodiments of the invention.

Referring to FIG. 4, a battery module 200 according to embodiments of the invention may include a plurality of battery cells 20 arranged to form multiple rows parallel to one another, a plurality of bus bars 22 electrically connecting one battery cell 20 to an adjacent battery cell 20, respectively, and a plurality of fuses F arranged to correspond to each of the bus bars 22, respectively.

The battery module 200 may include a housing, and the plurality of battery cells 20 arranged to form multiple rows parallel to one another may be accommodated in the housing.

In a selective embodiment, the battery module 200 may include a cover covering one side of the housing.

The battery cell 20 may include at least one electrode assembly that is a wound structure having a positive electrode, a negative electrode, and a separator which is an insulator interposed therebetween and a case 15 in which the electrode assembly 210 is housed. The battery cell 20 according to the present embodiment is described, by way of example, as a prismatic battery cell. However, the invention is not limited thereto, and may be applied to various types of battery cells, such as a pouch-type battery cell and a cylindrical battery cell.

The case may define the overall appearance of the battery cell 20 and may include a conductive metal such as aluminum, aluminum alloy, and nickel-plated steel. In addition, the case may provide a space in which the electrode assembly is accommodated.

The battery cell 20 may include a cap plate covering an opening of the case, and the case and the cap plate may include a conductive material. In embodiments, a first terminal and a second terminal, which are electrically connected to the positive electrode or the negative electrode, may be installed to protrude outward through the cap plate.

In embodiments, the bus bar 22 for electrically connecting one battery cell 20 to an adjacent battery cell 20 may be arranged on the first terminal and the second terminal.

The fuse F may be arranged in a region of the battery cell 20 and blow at various temperatures, and, in embodiments, the fuse F may be a temperature sensing circuit breaker and serve to break the circuit by detecting overheating caused by fire, short circuit, or abnormal operation.

The fuse F may form an electronic circuit that transmits an electrical signal to the fire alarm control panel (FACP), and at a low temperature, the fuse F may be short-circuited, allowing the signal transmission through the electronic circuit, but when a high temperature is applied, the fuse F may blow, which changes the circuit to an open mode.

When the circuit changes to the open mode due to the fuse F blowing, the operation of the circuit may switch to a passive operation that does not require power, allowing the fire to be recognized by the fire alarm control panel (FACP) through a hardwired signal transmission method embedded in the hardware.

In a selective embodiment, the fuse F may be arranged to correspond to each of the plurality of bus bars 22 for electrically connecting one battery cell 20 to an adjacent battery cell 20 among the plurality of battery cells 20 arranged to form multiple rows parallel to one another, and may blow due to high temperature resulting from overheating of the bus bar 22 caused by abnormal current or an event in the battery cell 20.

Specifically, the fuse F, which is arranged to correspond to each of the plurality of bus bars 22 for electrically connecting one battery cell 20 to an adjacent battery cell 20, may be short-circuited at a low temperature to allow the signal transmission through the electronic circuit, but may blow due to a high temperature resulting from the overheating of the bus bar 22 caused by the abnormal current or short circuit, thereby changing the circuit to the open mode. When the fuse F opens in this manner, the normally close (NC) contact of the relay closes, allowing the fire alarm control panel (FACP) to immediately detect the fire. In addition, when receiving the electrical signal, the fire alarm control panel (FACP) may transmit an electrical signal to a fire extinguishing device and the fire extinguishing agent may be sprayed to the battery module 200.

In embodiments, the fuse F may include a thermal fuse. In embodiments, the thermal fuse may include an insulating case, a fusible body enclosed by an encapsulating resin in the insulating case, and lead wires configured to be electrically connected to the outside at opposite ends of the fusible body. Thus, when heat exceeding a certain temperature is applied to the fusible body, the fusible body may be melted and the electrical connection may be broken. In this case, as the thermal fuse has very low internal resistance, there is almost no self-heating due to current flow when it is applied to a circuit, and the fusible body may blow by the influence due to a rise in ambient temperature, thereby opening the circuit.

In embodiments, the fuse F may blow at various temperatures, and the melting temperature may be selected according to the specifications and purpose of the battery cell 20 or the battery module 200. Specifically, the fuse F, which is arranged to correspond to the bus bar 22, may blow at a temperature of about 85°C to about 150°C, and when the fuse F blows at a temperature less than about 85°C, there may be a problem in that the fire extinguishing device is operated even when there is no overheating of the bus bar 22 caused by the abnormal current or short circuit, and when the fuse F blows at a temperature more than about 150°C, it may be difficult to detect the overheating of the bus bar 22 caused by the abnormal current or short circuit at an early stage, making it difficult to prevent the fire or explosion of the battery cell 20.

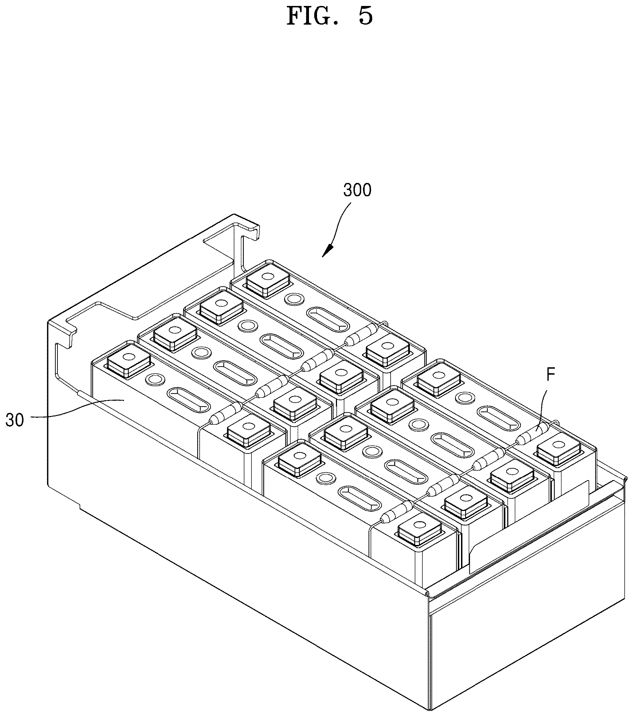

FIG. 5 is a perspective view schematically illustrating an example of a battery module according to embodiments of the invention.

Referring to FIG. 5, a battery module 300 according to embodiments of the invention may include a plurality of battery cells 20 arranged to form multiple rows parallel to one another and a plurality of fuses F arranged on regions of each case of the plurality of battery cells 30, respectively.

The battery module 300 may include a housing, and the plurality of battery cells 30 arranged to form multiple rows parallel to one another may be accommodated in the housing.

In a selective embodiment, the battery module 300 may include a cover covering one side of the housing.

The battery cell 30 may include at least one electrode assembly that is a wound structure having a positive electrode, a negative electrode, and a separator which is an insulator interposed therebetween and a case in which the electrode assembly is housed.

The battery cell 30 according to the present embodiment is described, by way of example, as a prismatic battery cell. However, the invention is not limited thereto, and may be applied to various types of battery cells, such as a pouch-type battery cell and a cylindrical battery cell.

The case may define the overall appearance of the battery cell 30 and may include a conductive metal such as aluminum, aluminum alloy, and nickel-plated steel. In addition, the case may provide a space in which an electrode assembly is accommodated.

The battery cell 30 may include a cap plate covering an opening of the case, and the case and the cap plate may include a conductive material.

The fuse F may be arranged in a region of the battery cell 30 and blow at various temperatures, and, in embodiments, the fuse F may be a temperature sensing circuit breaker and serve to break the circuit by detecting overheating caused by fire, short circuit, or abnormal operation.

The fuse F may form an electronic circuit that transmits an electrical signal to the fire alarm control panel (FACP), and at a low temperature, the fuse F may be short-circuited, allowing the signal transmission through the electronic circuit, but when a high temperature is applied, the fuse F may blow, which changes the circuit to an open mode. When the circuit changes to the open mode due to the fuse F blowing, the operation of the circuit may be changed to a passive operation that does not require power, allowing the fire to be recognized by the fire alarm control panel (FACP) through a hardwired signal transmission method embedded in the hardware.

In a selective embodiment, the fuse F may be arranged on each of a plurality of cap plates that cover each opening of the cases of the plurality of battery cells 30 arranged to form multiple rows parallel to one another, so that the fuse F may blow due to abnormally high temperature resulting from an event occurring in the battery cell 30.

Specifically, the fuse F arranged, which is arranged on each of a plurality of cap plates that cover each opening of the cases of the plurality of battery cells 30 arranged to form multiple rows parallel to one another, may be short-circuited at a low temperature to allow the signal transmission through the electronic circuit, but may blow due to high temperature resulting from an event occurring in the battery cell 30, thereby changing the circuit to an open mode. When the fuse F opens in this manner, the normally close (NC) contact of the relay closes, allowing the fire alarm control panel (FACP) to immediately detect the fire. In addition, when receiving the electrical signal, the fire alarm control panel (FACP) may transmit an electrical signal to a fire extinguishing device and the fire extinguishing agent may be sprayed to the battery module 300.

In embodiments, the fuse F may include a thermal fuse. In embodiments, the thermal fuse may include an insulating case, a fusible body enclosed by an encapsulating resin in the insulating case, and lead wires configured to be electrically connected to the outside at opposite ends of the fusible body. Thus, when heat exceeding a certain temperature is applied to the fusible body, the fusible body may melt and the electrical connection may be broken. In this case, as the thermal fuse has very low internal resistance, there is almost no self-heating due to current flow when it is applied to a circuit, and the fusible body may blow by the influence due to a rise in ambient temperature, thereby opening the circuit.

In embodiments, the fuse F may blow at various temperatures, and the blowing temperature may be selected according to the specifications and purpose of the battery cell 30 or the battery module 300. Specifically, the fuse F arranged on the cap plate may blow at a temperature of about 85°C to about 150°C, and when the fuse F blows at a temperature less than about 85°C, there may be a problem in that the fire extinguishing device is operated even in an overheating situation where an actual event does not occur in the battery cell 30, and when the fuse F blows at a temperature more than about 150°C, it may be difficult to detect the occurrence of the event in the battery cell 30 at an early stage.

As a result, the battery module according to embodiments of the invention may include the fuse F which is arranged in one region of the battery cell housed therein, and the fire may be detected at an early stage by the fuse F blowing or cutting when the event occurs in the battery cell.

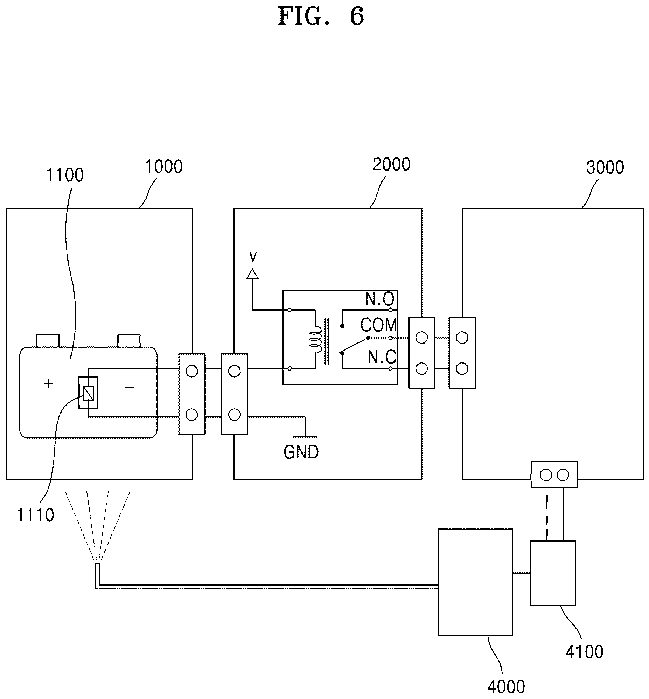

FIG. 6 is a schematic diagram schematically illustrating an example of a fire extinguishing device according to embodiments of the invention.

Referring to FIG. 6, a fire extinguishing device according to embodiments of the invention may include a battery module 1000, a relay 2000, a fire alarm control panel (FACP) 3000, and a fire extinguishing device 4000, and the battery module 1000 may include a battery cell 1100 and a fuse 1110 arranged in a region of the battery cell 1100.

The fuse F arranged in one region of the battery cell 1100 may form an electronic circuit that transmits an electrical signal to the fire alarm control panel (FACP), and at a low temperature, the fuse F may be short-circuited, allowing the signal transmission to the fire alarm control panel (FACP), but when a high temperature is applied, the fuse F may blow, which changes the circuit to an open mode. When the circuit changes to the open mode due to the fuse F blowing, the operation of the circuit may be changed to a passive operation that does not require power, allowing the fire to be recognized by the fire alarm control panel (FACP) through a hardwired signal transmission method embedded in the hardware. That is, even though any additional power source and wirings are not connected, the fire may be detected by making the fuse 1110 blow and the circuit open. Specifically, the fuse 1110 may be short-circuited at a low temperature, allowing the signal transmission through the electronic circuit, but when an event occurs in the battery cell 1100, the fuse 1110 may blow due to high-temperature gas or flame generated inside the battery cell 1100, thereby changing the circuit to the open mode. When the fuse 1110 opens in this manner, the relay 2000 may operate from a state in which it is connected (closed) to a first contact to a state in which it is connected (closed) to a second contact. Specifically, the first contact of the relay 2000 may be a normally open (NO) contact and the second contact may be a normally close (NC) contact, and the relay 2000 may be operated in a state that the NO contact is closed to a state that the NC contact becomes closed, which allows the electrical signal to be transmitted to the fire alarm control panel (FACP) 3000. In addition, on receiving the electrical signal, the fire alarm control panel (FACP) 3000 may transmit the electrical signal to the fire extinguishing device 4000, to operate the solenoid valve 4100 arranged in one region of the fire extinguishing device 4000, and thus the fire extinguishing agent may be sprayed to the battery module 1000. The battery module and fire extinguishing device described herein may be applied to an energy storage system (ESS) to quickly detect the fire when an event occurs in the battery cell and operate the fire extinguishing device.

When a fire breaks out, the conventional energy storage system (ESS) has a structure in which the fire extinguishing device operates to extinguish the fire after detecting the fire through a smoke detector, which is different from the fire extinguishing device according to embodiments of the invention, so that this structure has a problem of a time delay until the smoke detector detects the smoke because the smoke reaches the smoke detector along a smoke flow path. If there is a time delay before the smoke reaches the smoke detector, it may be difficult to extinguish the fire at an early stage, and furthermore, if the power line or communication line of the smoke detector is cut off due to the fire, it may occur that the fire is not detected at all. However, when the battery module and the fire extinguishing device according to embodiments of the invention are applied to an energy storage system, the fire may be detected at an early stage by using the fuse F, and since the fire can be detected in a passive manner that does not require a power supply, it is possible to prevent situations in which the fire detection becomes impossible due to disconnection of the wirings.

Accordingly, the energy storage system (ESS) including the battery module and the fire extinguishing device according to embodiments of the invention may detect and extinguish a fire at an early stage when the fuse, which is arranged in a region of the battery cell, blows due to high temperature.

According to some embodiments of the present invention, the battery module may include a fuse that is arranged in a region of a battery cell housed therein, and a fire may be detected at an early stage by fuse blowing when an event occurs in the battery cell.

Although the present invention has been described herein with reference to limited embodiments and drawings, it is not limited thereto, and various modifications and alterations may be made by those of ordinary skill in the art without departing from the technical spirit of the invention and the scope of the appended claims and their equivalents.

## Claims

1. A battery module (100, 200, 300, 1000) comprising:
a plurality of battery cells (10, 20, 30, 1100) arranged in multiple rows substantially
parallel to one another;
a housing accommodating the plurality of battery cells (10, 20, 30, 1100); and
a cover covering a side of the housing,
wherein a fuse (F, 1110) is arranged in a region of each of the plurality of battery cells (10, 20, 30, 1100).

2. The battery module (100, 200, 300, 1000) according to claim 1, further comprising:
a vent hole (13) arranged on a surface of the battery cell (10, 20, 30, 1100),
wherein the fuse (F, 1110) is arranged to correspond to the vent hole (13).

3. The battery module (100, 200, 300, 1000) according to claim 1 or 2, wherein
the fuse (F, 1110) includes a thermal fuse.

4. The battery module (100, 200, 300, 1000) according to claim 3, wherein
the thermal fuse includes an insulating case and a fusible body enclosed by resin.

5. A battery module (200, 1000) comprising:
a plurality of battery cells (20, 1100) arranged in multiple rows substantially parallel to one another;
a plurality of bus bars (22) electrically connecting one battery cell (20, 1100) to a battery cell (20, 1100) that is adjacent to the one battery cell (20, 1100) among the plurality of battery cells (20, 1100);
a housing accommodating the plurality of battery cells (20, 1100); and
a cover covering one side of the housing,
wherein a fuse (F, 1110) is arranged in one region of each of the plurality of busbars (22).

6. The battery module (200) according to claim 5, wherein
the fuse (F, 1110) includes a thermal fuse.

7. The battery module (200, 1000) according to claim 6, wherein
the thermal fuse includes an insulating case and a fusible body enclosed by resin.

8. An energy storage system comprising:
a plurality of battery modules (100, 200, 300, 1000); and
a fire extinguishing device (4000);
wherein a plurality of battery cells (10, 20, 30, 1100) are accommodated in each of the battery modules (100, 200, 300, 1000), and a fuse (F, 1110) is arranged in one region of each of the battery cells (10, 20, 30, 1100).

9. The energy storage system according to claim 8, wherein:
the battery cell (10, 20, 30, 1100) includes a vent hole (13) arranged on a surface thereof, and
the fuse (F, 1110) is arranged to correspond to the vent hole (13).

10. The energy storage system according to claim 8 or 9, wherein:
the battery module (200, 1000) includes a plurality of bus bars (22) electrically connecting one battery cell (20, 1100) to a battery cell (20, 1100) that is adjacent to the one battery cell (20, 1100) among the plurality of battery cells (20, 1100), and
the fuse (F, 1110) is arranged in one region of each of the plurality of bus bars (22).

11. The energy storage system according to any one of claims 8 to 10, wherein
the fuse (F, 1110) includes a thermal fuse.

12. The energy storage system according to any one of claims 8 to 11, wherein
the fuse (F, 1110) is electrically connected to the fire extinguishing device (4000).

13. The energy storage system according to any one of claims 8 to 12, wherein
the fire extinguishing device (4000) includes a relay (2000), a fire alarm control panel (3000), and a fire extinguishing device (4000).

14. The energy storage system according to claim 13, wherein:
the relay (2000) includes a first contact and a second contact, and
the relay (2000), which corresponds to a state that the first contact is closed, is operated to a state that the second contact is closed when the fuse (F, 1110) blows.

15. The energy storage system according to claim 14, wherein:
a valve (4100) is arranged in one region of the fire extinguishing device (4000), and
the valve (4100) is configured to operate when the relay (2000) corresponds to a state that the second contact is closed.
